# EUROPEAN PATENT APPLICATION

(11) **EP 3 057 313 A1**
(43) Date of publication of application: **17.08.2016**
(21) Application number: 16155110.6
(22) Date of filing: 10.02.2016
(51) Int. Cl.: H04N 5/445, H04N 21/431, H04N 21/482

(54) **DISPLAY APPARATUS AND DISPLAY METHOD**

(30) Priority: 10.02.2015 KR 20150020289
(71) Applicant: Samsung Electronics Co., Ltd., Gyeonggi-do 16677 (KR)
(72) Inventor: LEE, Yui-yoon, Gyeonggi-do (KR)
(74) Representative: Taor, Simon Edward William

(57) **Abstract**

Provided are a display apparatus and a display method. The display apparatus displays multiple items, each of which displaying at least one of text and an image, transforms one of the multiple items by transforming at least one of text and an image of the item in response to a movable object, e.g., a cursor, being placed on the item according to a user input, and displays the transformed item without changing a size of the item.

## Description

Methods and apparatuses consistent with exemplary embodiments relate to a display apparatus and a display method, and more particularly, to an apparatus and a method for displaying at least one item representing digital content.

A display apparatus is capable of displaying images. Users may watch broadcast programs using a display apparatus. A display apparatus displays a broadcast program corresponding to a broadcast signal selected by a user from among many broadcast signals transmitted from broadcasting stations. The technological shift from analog to digital is one of recent trends in broadcasting.

Digital broadcasting mostly involves transmitting a digital image signal and a voice signal. Digital broadcasting offers many advantages over analog broadcasting, such as robustness against noise, low data loss, ease of error correction, and clear, high-definition images. Also, digital broadcasting enables interactive services, which are not provided by analog broadcasting.

Recently smart TVs have digital broadcasting functions and provide a variety of digital contents. As smart TVs have various smart functions and provide various services, a variety of content information is also provided by smart TVs. Smart TV developers try to determine the best way in which each content is shown and various contents are arranged. For example, some smart TVs use various animation effects when providing the contents to users. Further, smart functions for assisting handicapped viewers are increasingly developed to provide additional information for the disabled.

Methods and apparatuses consistent with exemplary embodiments relate to a display apparatus and a display method for effectively providing text information about contents to users, especially to users with poor vision.

Various aspects of the exemplary embodiments will be set forth in part in the description which follows and, in part, will be apparent from the description, or may be learned by practice of the presented exemplary embodiments.

According to an aspect of an exemplary embodiment, there is provided a display apparatus including a display configured to display one or more items, each of the one or more items comprising text; and a controller configured to transform text of an item among the one or more items and display the transformed text in the item on the display, in response to receiving an input selecting the item displayed on the display.

The controller may be further configured to transform the text by performing at least one of enlarging the text, changing a color of the text, changing a transparency of the text, changing a background color of the text, changing a font of the text, and changing an outline of the text.

The controller may be further configured to display the transformed text in the item without changing a layout of the item.

Each of the one or more items may further include an image.

The controller may be further configured to transform the item by enlarging the text of the item and reducing a size of the image.

The controller may be further configured to display the transformed text without the image.

The controller may be further configured to overlay a part or all of the transformed text on the image.

The controller may be further configured to display only a part of the transformed text in the item when a size of the item may be smaller than a size required to display the entire transformed text, and scroll the transformed text to display a remaining part of the transformed text in the item in response to a scrolling input on the item.

According to another aspect of an exemplary embodiment, there is provided a display method including: displaying one or more items, each of the one or more items comprising text; and transforming text of an item among the one or more items and displaying the transformed text in the item, in response to receiving an input selecting the item.

The transforming of the text may include at least one of enlarging the text, changing a color of the text, changing a transparency of the text, changing a background color of the text, changing a font of the text, and changing an outline of the text.

The displaying the transformed text in the item may include maintaining a layout of the item.

Each of the one or more items may further include an image.

According to an aspect of an exemplary embodiment, there is provided a display apparatus including: a memory configured to store a computer program; a processor configured to control the display apparatus by executing the computer program, wherein the computer program comprises instructions to implement operations of a method of displaying an item on the display apparatus, the method comprising: displaying the item, the item comprising at least one of text and an image; transforming at least one of the text and the image of the item according to a user input; and displaying the transformed item, wherein a size of the item is equal to a size of the transformed item.

The item may include the image, and the transforming may include: extracting text from the image of the item; and transforming the item to display the extracted text.

The transforming may include: extracting a region of the image comprising text; enlarging the region; and transforming the item to display the enlarged region.

The item may include the text, and wherein the transforming may include transforming the text by at least one of enlarging the text, changing a color of the text, changing a transparency of the text, changing a background color of the text, changing a font of the text, and changing an outline of the text.

According to an aspect of an exemplary embodiment, there is provided a display method comprising: displaying one or more items, each of the one or more items comprising at least one of text and an image; and transforming at least one of the text and the image of an item among the one or more items and displaying the transformed item, in response to receiving an input selecting the item.

The item may comprise the image, and wherein the transforming may comprise transforming the image by: extracting text from the image of the item; and transforming the item to display the extracted text.

The item may comprise the image, and wherein the transforming may comprise transforming the image by: extracting a region of the image comprising text; enlarging the region; and transforming the item to display the enlarged region.

The item may comprise the text, and wherein the transforming may comprise transforming the text by at least one of enlarging the text, changing a color of the text, changing a transparency of the text, changing a background color of the text, changing a font of the text, and changing an outline of the text.

The method may further comprise displaying a plurality of items, and transforming the selected item without changing the size of the selected item.

According to an aspect of the invention, there is provided a display apparatus as set out in claim 1. Preferred features are set out in claims 2 to 10.

According to an aspect of the invention, there is provided a display method as set out in claim 11. Preferred features are set out in claims 12 to 15.

These and/or other aspects will become apparent and more readily appreciated from the following description of the exemplary embodiments, taken in conjunction with the accompanying drawings in which:
FIG. 1A illustrates a screen of a display apparatus according to an exemplary embodiment;
FIG. 1B illustrates a structure of an item according to an exemplary embodiment;
FIG. 1C illustrates a structure of an item according to another exemplary embodiment;
FIG. 2 is a block diagram of the display apparatus according to an exemplary embodiment;
FIG. 3 is a block diagram of a display apparatus according to another exemplary embodiment;
FIG. 4 is a block diagram illustrating a configuration of a control apparatus according to an exemplary embodiment;
FIG. 5 is a flowchart illustrating a display method according to an exemplary embodiment;
FIGS. 6A through 6C illustrate screens displayed according to a display method according to an exemplary embodiment;
FIGS. 7A through 7I illustrate a method of transforming text included in a focused item, according to an exemplary embodiment; and
FIGS. 8A through 8C illustrate a method of navigating and executing items, according to an exemplary embodiment.

Exemplary embodiments will be described more fully hereinafter with reference to the accompanying drawings. A method of configuring and using an electronic apparatus according to exemplary embodiments will be described more fully hereinafter with reference to the accompanying drawings. The same reference numerals in the drawings denote the same components or elements that perform the same functions.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of exemplary embodiments. As used herein, the term "and/or" includes any and all combinations of one or more of the associated listed items.

When a key provided on a control apparatus is selected, it may mean that the key is pressed, touched, dragged, or activated.

The term 'content' used herein may include, but is not limited to, a video, an image, text, or a web document.

A portion of a display of a display apparatus on which actual content is output may be referred to as a screen.

The terminology used herein is for the purpose of describing exemplary embodiments and is not intended to be limiting of exemplary embodiments. As used herein, the singular forms "a", "an", and "the" are intended to include the plural forms as well, unless the context clearly indicates otherwise. It will be further understood that the terms "comprises", "comprising", "includes", and/or "including" used herein specify the presence of stated features, integers, steps, operations, elements, components, and/or groups thereof but do not preclude the presence or addition of one or more other features, integers, steps, operations, elements, components, and/or groups thereof.

As used herein, the term "and/or" includes any and all combinations of one or more of the associated listed items. Expressions such as "at least one of" when preceding a list of elements, modify the entire list of elements and do not modify the individual elements of the list.

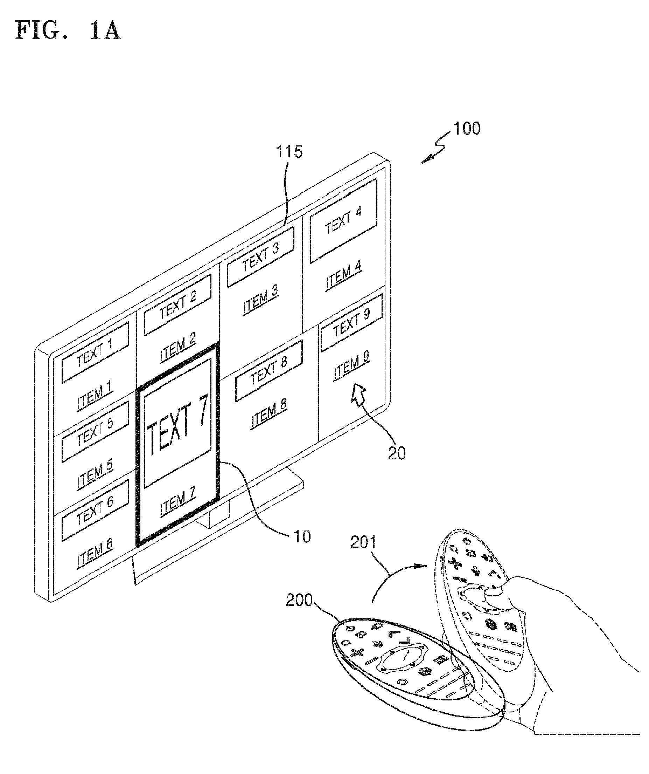

FIG. 1A shows a screen of a display apparatus 100 according to an exemplary embodiment.

Referring to FIG. 1A, the display apparatus 100 may communicate with a control apparatus 200 in a wired or wireless manner. For example, the control apparatus 200 may control the display apparatus 100 using short-range communication such as Infrared communication, Bluetooth communication, etc. A communication protocol for the communication between the display apparatus 100 and the control apparatus 200, such as infrared (IR), is not limited to a specific one in embodiments of the invention. A user may use the control apparatus 200 to control a function of the display apparatus 100 using at least one of a key (i.e., a button), a touchpad, a microphone that may receive the user's voice, and a sensor that may recognize a motion 201 of the control apparatus 200.

The control apparatus 200 may include a power on/off button for turning on or off the display apparatus 100. A function of the display apparatus 100 controlled by the control apparatus 200 may be: to change a channel of the display apparatus 100, adjust a volume, select terrestrial broadcast, cable broadcast, or satellite broadcast, or set a configuration in response to a user's input.

The term 'user' refers to a person who controls a function or an operation of the display apparatus 100 using the control apparatus 200. Examples of the user may include, but is not limited to, a viewer, a manager, and an installer in embodiments of the invention.

The display apparatus 100 may show at least one item on a display 115.

An "item" refers to a visual object displayed on display apparatus 100 to represent corresponding content, such as an icon, thumbnail, etc. For example, an item may represent an image content such as a movie or a drama, an audio content such as music, an application, a broadcast channel, and/or history information of content accessed by the user. The item may contain, for example, text and an image (e.g. an icon or thumbnail).

A plurality of items may be displayed as images. For example, when an item represents a movie or a drama, the item may be displayed as a movie poster or a drama poster. If an item represents music, the item may be displayed as a music album poster. If an item represents an application, the item may be displayed as an image of the application or a screen shot of the application captured when the application was executed most recently. If an item represents a broadcast channel, the item may be displayed as a screen shot of the broadcast channel captured when the broadcast channel was last viewed by the user or an image of a program that is being currently broadcast on the channel. If an item represents history information of content accessed by the user, the item may be displayed as an image of a screen that was executed most recently.

Also, an item may represent an interface through which the display apparatus 100 and an external apparatus are connected to each other, or may represent the external apparatus connected to the display apparatus 100. For example, an item may represent a specific port of the image display apparatus 100, through which the external apparatus is connected. Examples of a port represented by an item may include, but are not limited to, a high-definition multimedia interface (HDMI) port, a component jack, a PC port, and a universal serial bus (USB) port in embodiments of the invention. Also, an item representing an external apparatus may represent an external apparatus connected to the external interface.

Referring to FIG. 1A, the display apparatus 100 may display a plurality of items, e.g., an item 1 through an item 9, on the display 115. The items may or may not have the same size. In this exemplary embodiment, the items have different sizes, as shown in FIG. 1A.

An item may include text. In FIG. 1A, each of the items displayed on the display 115 includes text. Sizes of text included in the items may be the same or different from one another.

The display apparatus 100 may control the items using a cursor 20 that moves through the items according to a user's input on the control apparatus 200. In other words, the control apparatus 200 may function as a pointing device that controls the cursor 20. The display apparatus 100 may control the items using a focus object 10 to select one or more items among all the items displayed on the display 115 according to a user's input on the control apparatus 200. The user may move the focus object 10 using a direction key that is provided on the control apparatus 200.

A "focus object" refers to an object that moves through the items according to a user input. The focus object may be used to select one or more items among the entire displayed items, and may be implemented in various manners. For example, the focus object 10 may be implemented by drawing a thick line around the focused item, as shown in FIG. 1A. The focus object may be implemented in the form of a cursor 20.

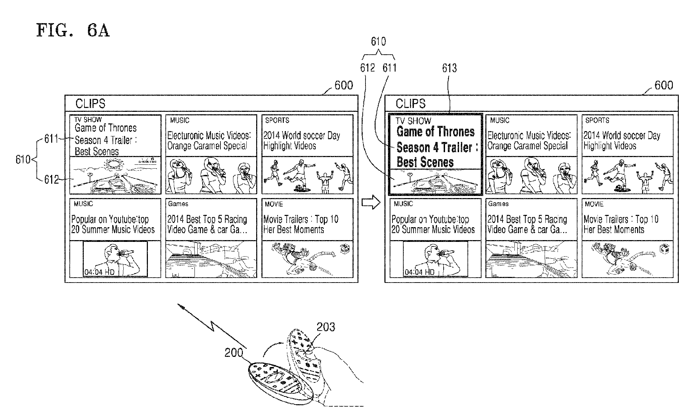

Alternatively, the focus object itself may be invisible. In this case, the user may recognize a location of the focus object based on text of the focused item, which is distinctly transformed when the item is focused. More detailed explanation about transforming text of items will be provided below with reference to FIGS. 6A through 8B.

Referring to FIG. 1A, when the user positions the focus object 10 on a specific item by manipulating the control apparatus 200, the display apparatus 100 may transform and output text included in the specific item, i.e., the focused item, without changing the layout of the displayed items. In FIG. 1A, as the focus is placed over the "item 7," a size of text of the item 7 increases. In an exemplary embodiment, the display apparatus 100 may transform the focused item differently. For example, the display apparatus 100 may change a size, a color, a transparency, an outline, and/or a font of text included in the focused item.

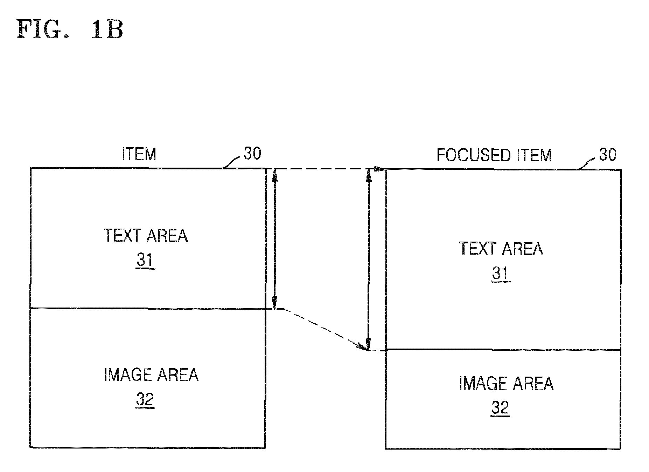

FIG. 1B illustrates a structure of an item 30 according to an exemplary embodiment.

Referring to FIG. 1B, the item 30 representing the content may include a text area 31 for displaying text that describes the content and an image area for displaying a thumbnail image of the content.

As such, when the item 30 including the text area 31 and the image area 32 is focused, the display apparatus 100 may transform the item 30 by transforming the text area 31 and/or the text itself in the text area 31. The image area 32 is not be transformed. As shown in FIG. 1B, the display apparatus 100 may expand the text area 31 when the item 30 is focused. In an exemplary embodiment, the display apparatus 100 may transform the text in various ways. For example, the display apparatus 100 may change a size, a color, a style, and/or a font of the text.

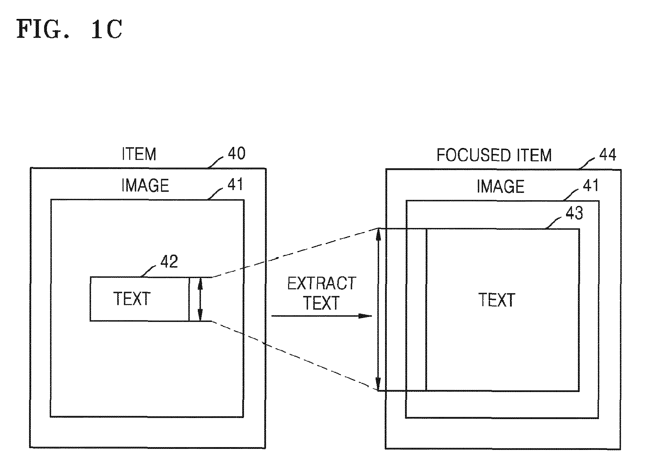

FIG. 1C illustrates a structure of an item 40 according to another exemplary embodiment.

Referring to FIG. 1C, the item 40 includes an image 41, e.g., a thumbnail, representing the content, and the image 41 includes text 42.

When the item 40 is focused, the display apparatus 100 may extract the text 42 from the image 41, transform the extracted text 42, combine the transformed text 43 and the image 41, and output the transformed item 44. Specifically, the extracted text may be transformed by changing a style of the text. The style may include, but is not limited to, a font, a size, a text color, and a background color in embodiments of the invention.

Alternatively, only the extracted text may be displayed without the image 41.

Since a layout of the focused item is not changed and only text included in the focused item is transformed, the user may view all of the displayed items without obstruction. Further, since the text included in the focused item is enlarged, a user, especially a user having restricted vision, may easily recognize the text of the focused item.

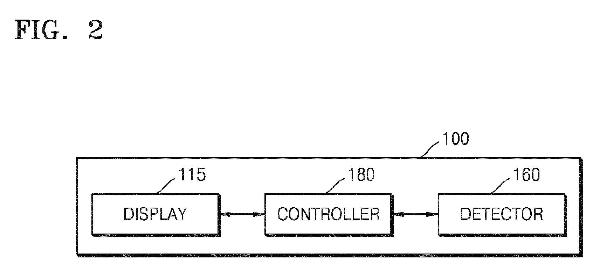

FIG. 2 is a block diagram of the display apparatus 100 according to an exemplary embodiment.

Referring to FIG. 2, the display apparatus 100 may include a display 115, a controller 180, and a detector 160.

The display 115 displays at least one item. Each of the at least one item may include text describing corresponding content and/or an image for visually representing the content. The image for visually representing the content may be a thumbnail image.

The detector 160 may detect an input to the control apparatus 200 for controlling the at least one item displayed on the display 115. The input for controlling the at least one item may be generated using a pointing device, a touch input interface such as a touch panel or a touch pad, and/or a direction key of the control apparatus 200.

The controller 180 may select, i.e., focus, an item based on the detected input. Specifically, the controller 180 may receive from the detector 160 a signal corresponding to a pointing position of the control apparatus 200 or a signal corresponding to an input of a direction key of the control apparatus 200, transform the selected item, i.e., focused item, and display the focused item on the display 115.

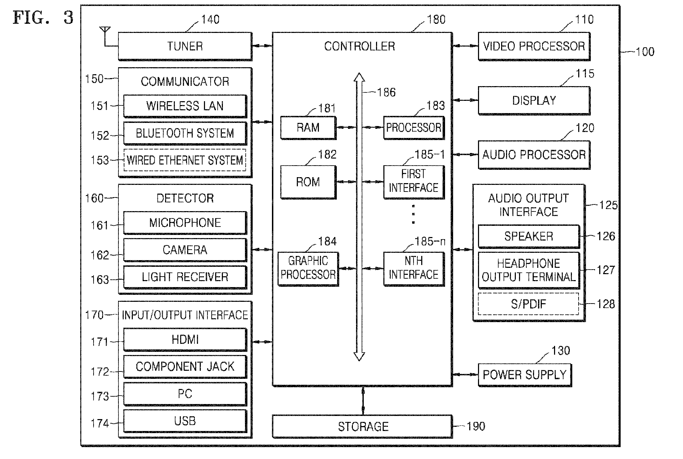

FIG. 3 is a detailed block diagram of the display apparatus 100 according to an exemplary embodiment.

Referring to FIG. 3, the display apparatus 100 may include a video processor 110, a display 115, an audio processor 120, an audio output interface 125, a power supply 130, a tuner 140, a communicator 150, a detector 160, an input/output interface 170, a controller 180, and a storage 190.

The video processor 110 may process video data received by the display apparatus 100. The video processor 110 may perform various image processing such as decoding, scaling, noise filtering, frame rate conversion, or resolution conversion on the video data.

The display 115 may display a video included in a broadcast signal received through the tuner 140 under control of the controller 180. Also, the display 115 may display content (e.g., a moving image) input through the communicator 150 or the input/output interface 170. The display 115 may output an image stored in the storage 190 under control of the controller 180. Also, the display 115 may display a voice user interface (UI) (including a voice command guide) for performing a voice recognition task corresponding to voice recognition or a motion UI (including a user motion guide) for performing a motion recognition task corresponding to motion recognition.

The display 115 according to an exemplary embodiment may display a cursor on the screen in response to an input the control apparatus 200 operating in a pointing mode, under control of the controller 180.

The display 115 according to an exemplary embodiment may display a focus object on an item in response to an input to the control apparatus 200 operating in a direction key mode, under control of the controller 180.

The display 115 according to an exemplary embodiment may provide a plurality of items, and at least one of the items may include text.

In response to an input that focuses one item among the plurality of items, the display 115 may transform and display text included in the focused item. The transformation of the text may be performed by the controller 180.

The audio processor 120 may process audio data. The audio processor 120 may perform various processing such as decoding, amplification, or noise filtering on the audio data. The audio processor 120 may include a plurality of audio processing modules in order to process audios corresponding to a plurality of pieces of content.

The audio output interface 125 may output an audio included in a broadcast signal received through the tuner 140 under control of the controller 180. The audio output interface 125 may output an audio (e.g., a voice or a sound) input through the communicator 150 or the input/output interface 170. Also, the audio output interface 125 may output an audio stored in the storage 190 under control of the controller 180. The audio output interface 125 may include at least one of a speaker 126, a headphone output terminal 127, and a Sony/Philips digital interface (S/PDIF) output terminal 128. The audio output interface 125 may include a combination of the speaker 126, the headphone output terminal 127, and the S/PDIF output terminal 128.

The power supply 130 may supply power input from an external power supply source to elements (i.e., 110 through 190) of the display apparatus 100 under control of the controller 180. Also, the power supply 130 may supply power output from one or more batteries provided in the display apparatus 100 to the elements 110 through 190 under control of the controller 180.

The tuner 140 may tune to a frequency of a channel to be received by the display apparatus 100 by performing amplification, mixing, or resonance on a broadcast signal received in a wired or wireless manner. The broadcast signal may include, for example, an audio, a video, and additional information (e.g., an electronic program guide (EPG)).

The tuner 140 may receive a broadcast signal in a frequency band corresponding to a channel number (e.g., a cable broadcast channel 506) according to the user's input (e.g., a control signal received from the control apparatus 200, for example, a channel number input, a channel up-down input, or a channel input on an EPG screen).

The communicator 150 may include a wireless local area network (LAN) 151, a Bluetooth system 152, and/or a wired Ethernet system 153 according to an exemplary embodiment. Also, the communicator 150 may include a combination of the wireless LAN 151, the Bluetooth system 152, and the wired Ethernet system 153. The communicator 150 may receive a control signal from the control apparatus 200 under control of the controller 180. The control signal may include, but is not limited to, a Bluetooth signal, a radio frequency (RF) signal, and a Wi-Fi signal in embodiments of the invention. The communicator 150 may further include a short-range communication system (e.g., a near-field communication (NFC) system or a Bluetooth low energy (BLE) system.

The detector 160 may detect the user's voice, image, or interaction.

The microphone 161 may receive the user's uttered voice. The microphone 161 may convert the received voice into an electrical signal and output the electrical signal to the controller 180. The user's voice may include, for example, a voice corresponding to a menu or a function of the display apparatus 100. A recommended recognition range of the microphone 161 may be about 4 m between the microphone 161 and the user's position and may vary according to the user's voice tone and an ambient environment (e.g., a speaker sound or ambient noise).

It will be understood by one of ordinary skill in the art that the microphone 161 may be omitted according to the performance and the structure of the display apparatus 100.

The camera 162 receives an image (e.g., continuous frames) corresponding to the user's motion including a gesture in a recognition range. For example, the recognition range of the camera 162 may be from about 0.1 mm to about 5 mm between the camera 162 and the user's position. The user's motion may include, for example, a motion of the user's body part or region such as the user's face, facial expression, hand, fist, or finger. The camera 162 may convert the received image into an electrical signal and may output the electrical signal to the controller 180 under control of the controller 180.

The controller 180 may manage overall operations of the display apparatus 100. The controller 180 may select a menu or an item displayed on the display apparatus 100 based on a result of motion recognition and control other elements based on the recognized motion. For example, the controller 180 may adjust a channel, adjust a volume, or move an indicator.

The camera 162 may include a lens and an image sensor. The camera 162 may include a plurality of lenses and perform image processing, thereby supporting optical zooming and digital zooming. A recognition range of the camera 162 may be set to vary according to an angle of a camera and an ambient environment condition. When the camera 162 includes a plurality of cameras, the camera 162 may receive three-dimensional (3D) still images or 3D moving images using the plurality of cameras.

It will be understood by one of ordinary skill in the art that the camera 162 may be omitted according to the performance and the structure of the display apparatus 100.

The light receiver 163 receives, through a light window or the like in a bezel of the display 115, an optical signal (including a control signal) transmitted from the control apparatus 200 that is outside the light receiver 163. The light receiver 163 may receive an optical signal corresponding to the user's input (e.g., a touch, a push, a touch gesture, a voice, or a motion) from the control apparatus 200. The control signal may be extracted from the received optical signal under control of the controller 180.

According to an exemplary embodiment, the light receiver 163 may receive a signal corresponding to a pointing position of the control apparatus 200 and may transmit the signal to the controller 180. For example, when the user moves the control apparatus 200 while touching a touchpad 203 provided thereon with a finger, the light receiver 163 may receive a signal corresponding to the movement of the control apparatus 200 and may transmit the signal to the controller 180.

According to an exemplary embodiment, the light receiver 163 may receive a signal indicating that a specific button provided on the control apparatus 200 is pressed and may transmit the signal to the controller 180. For example, when the user presses a finger on the touchpad 203 provided as a button on the control apparatus 200, the light receiver 163 may receive a signal indicating that the touchpad 203 is pressed and may transmit the signal to the controller 180. For example, the signal indicating that the touchpad 203 is pressed may be used to select one of items.

According to an exemplary embodiment, the light receiver 163 may receive a signal corresponding to an input of a direction key of the control apparatus 200 and may transmit the signal to the controller 180. For example, when the user presses a direction key provided on the control apparatus 200, the light receiver 163 may receive a signal indicating that the direction key is pressed and may transmit the signal to the controller 180.

The input/output interface 170 receives a video (e.g., a moving image), an audio (e.g., a voice or music), and additional information (e.g., an EPG) from the outside of the display apparatus 100 under control of the controller 180. The input/output interface 170 may include one of an HDMI port 171, a component jack 172, a PC port 173, and a USB port 174. Alternatively, the input/output interface 170 may include a combination of the HDMI port 171, the component jack 172, the PC port 173, and the USB port 174.

It will be understood by one of ordinary skill in the art that the input/output interface 170 may be configured and operate in various ways.

The controller 180 may control overall operations of the display apparatus 100 and signal transmission/reception between the elements 110 through 190 of the display apparatus 100, and processes data. When the user's input occurs or a condition that is preset and stored is satisfied, the controller 180 may execute an operation system (OS) and various applications that are stored in the storage 190.

The controller 180 may include a random-access memory (RAM) 181 that stores a signal or data input from the outside of the display apparatus 100 or a signal or data related to various operations performed in the display apparatus 100, a read-only memory (ROM) 182 that stores a control program for controlling the display apparatus 100, and a processor 183.

The processor 183 may include a graphics processing unit (GPU) for performing graphics processing on a video. The processor 183 may be provided as a system-on-chip (SoC) including a core combined with a GPU. The processor 183 may include a single-core, a dual-core, a triple-core, a quad-core, or a multiple core.

Also, the processor 183 may include a plurality of processors. For example, the processor 183 may include a main processor and a sub-processor that operates in a sleep mode.

A graphic processor 184 generates a screen including various objects such as an icon, an image, and text using a calculator and a renderer. Based on user's interaction detected through the detector 160, the calculator calculates an attribute value such as a coordinate value, a shape, a size, or a color of each object according to a layout of the screen. The renderer generates the screen having any of various layouts including the object based the attribute value calculated by the calculator. The screen generated by the renderer is displayed within a display area of the display 115.

According to an exemplary embodiment, the graphic processor 184 may generate a cursor to be displayed on the screen or a focus object which applies a visual effect to a focused item, in response to an input of the control apparatus 200, under control of the controller 180.

According to an exemplary embodiment, the graphic processor 184 may generate a plurality of items under control of the controller 180. Each of the plurality of items includes at least text. Each of the plurality of items may include a text area and an image area. Alternatively, each of the plurality of items may include an image including text.

According to an exemplary embodiment, the graphic processor 184 may transform text of a text area included in a focused item. The graphic processor 184 may transform the text by enlarging the text, changing a color of the text, changing a transparency of the text, changing a font of the text, or changing a background color of the text. When an item includes an image including text, the text may be recognized and extracted from the image using a text extractor, and the extracted text may be transformed.

First through nth interfaces 185-1 through 185-n are connected to various elements. One of the first through nth interfaces 185-1 through 185-n may be a network interface connected to an external apparatus.

The RAM 181, the ROM 182, the processor 183, the graphic processor 184, and the first through nth interfaces 185-1 through 185-n may be connected to one another via an internal bus 186.

The term 'controller' of the display apparatus 100 refers collectively to the processor 183, the ROM 182, and the RAM 181.

The controller 180 may receive pointing position information of the control apparatus 200 through at least one of the light receiver 163 that receives light output from the control apparatus 200 and a panel key provided on a side surface or a rear surface of the display apparatus 100.

According to an exemplary embodiment, the controller 180 may control the display 115 to display at least one item each including at least text.

According to an exemplary embodiment, the controller 180 may receive a detection signal from the detector 160 that receives an input that focuses one of items displayed on the display 115 or an input that moves a focus object from one item to another item using the control apparatus 200.

According to an exemplary embodiment, in response to the detection signal received from the detector 160, the controller 180 may control the display 115 to transform and display text included in the focused item.

According to an exemplary embodiment, the controller 180 may transform the text by performing at least one of enlarging the text, changing a color of the text, changing a transparency of the text, changing a background color of the text, changing a font of the text, and changing an outline of the text.

According to an exemplary embodiment, when an item including an image including text is focused, the controller 180 may recognize and extract the text from the image and may transform the extracted text.

According to an exemplary embodiment, in response to an input of the control apparatus 200 that focuses an item, the controller 180 may control the display 115 to display the focused item without changing a layout of the focused item.

It will be understood by one of ordinary skill in the art that the controller 180 may be configured and operate in various ways.

The storage 190 may store various data, programs, or applications for driving and controlling the display apparatus 100 under control of the controller 180. The storage 190 may store signals or data that are input/output according to operations of the video processor 110, the display 115, the audio processor 120, the audio output interface 125, the power supply 130, the tuner 140, the communicator 150, the detector 160, and the input/output interface 170. The storage 190 may store a control program for controlling the display apparatus 100 and the controller 180, an application initially provided by a manufacturer or downloaded from the outside, a GUI related to the application, an object (e.g., an image, text, an icon, or a button) for providing the GUI, user information, a document, databases, or related data.

The term 'storage' according to an exemplary embodiment refers collectively to the storage 190, the ROM 182, or the RAM 181 of the controller 180, or a memory card (e.g., a micro secure digital (SD) card or a USB memory) mounted in the display apparatus 100. Also, the storage 190 may include a nonvolatile memory, a volatile memory, a hard disk drive (HDD), or a solid-state drive (SSD).

The storage 190 may include a display control module according to an exemplary embodiment. The display control module may be implemented as hardware or software in order to perform a display control function. The controller 180 may control overall operations of the display apparatus 100 via executing the instructions stored in the storage 190.

According to an exemplary embodiment, the storage 190 may store images corresponding to a plurality of items.

According to an exemplary embodiment, the storage 190 may store an image corresponding to a cursor of the control apparatus 200.

According to an exemplary embodiment, the storage 190 may store a graphic image for a focus object to apply a focus visual effect to a focused item.

At least one element may be added to or omitted from the elements (e.g., 110 through 190) of the display apparatus 100 of FIG. 3 according to the performance of the display apparatus 100. Also, it will be understood by one of ordinary skill in the art that positions of the elements (e.g., 110 through 190) may vary according to the performance or the structure of the display apparatus 100.

According to another exemplary embodiment, a set-top box or an Internet protocol (IP) set-top box connected to the display apparatus 100 may control the display apparatus 100 to display at least one item, each including at least text, and to transform and display a focused item based on an input to the control apparatus 200. The set-top box or the IP set-top box may include a communicator and a processor and provides a multimedia communication service by being connected to an external network.

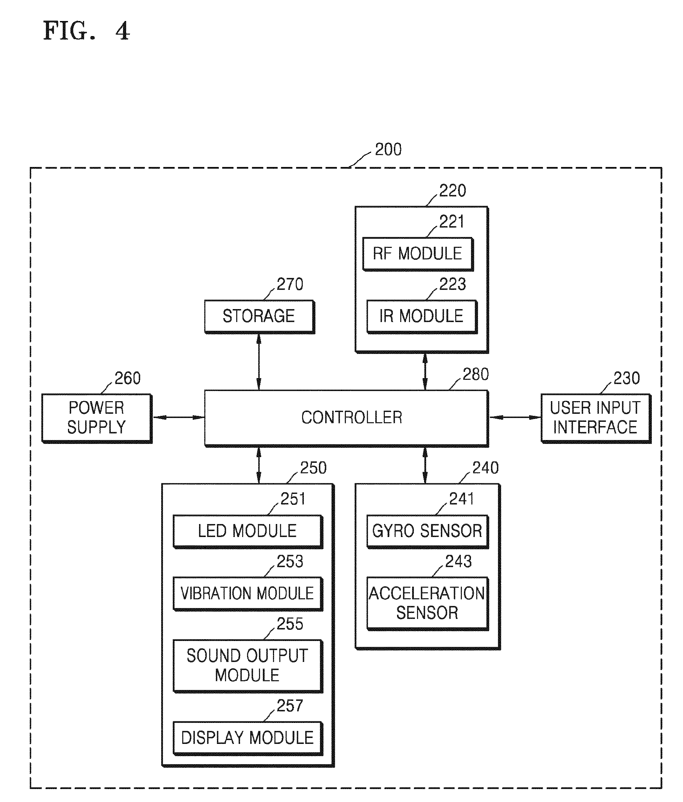

FIG. 4 is a block diagram illustrating a configuration of the control apparatus 200 according to an exemplary embodiment.

Referring to FIG. 4, the control apparatus 200 may include a wireless communicator 220, a user input interface 230, a sensor unit 240, an output unit 250, a power supply 260, a storage 270, and a controller 280.

The wireless communicator 220 may communicate with the display apparatus 100. The wireless communicator 220 may include an RF module 221 that may transmit/receive a signal to/from the display apparatus 100 according to the RF communication standard. Also, the control apparatus 200 may include an infrared (IR) module that may transmit/receive a signal to/from the display apparatus 100 according to the IR communication standard.

In an exemplary embodiment, the control apparatus 200 may transmit a signal containing information about a movement of the control apparatus 200 to the display apparatus 100 through the RF module 221.

Also, the control apparatus 200 may receive a signal transmitted from the display apparatus 100 through the RF module 221. Also, if necessary, the control apparatus 200 may transmit a command to turn on/off power, change a channel, or change a volume to the display apparatus 100 through the IR module 223.

The user input interface 230 may include a keypad, a button, a touchpad, or a touch-screen. The user may input a command related to the display apparatus 100 to the control apparatus 200 by manipulating the user input interface 230. When the user input interface 230 includes a hard key button, the user may input a command related to the display apparatus 100 to the control apparatus 200 by pushing the hard key button. When the user input interface 230 includes a touch-screen, the user may input a command to the control apparatus 200 for controlling the display apparatus 100 by touching a soft key on the touch-screen.

For example, the user input interface 230 may include a multi-direction key pad, e.g., 4-direction buttons or 4-direction keys. The 4-direction buttons or the 4-direction keys may be used to control a window, an area, an application, or an item displayed on the display 115. The 4-direction buttons or the 4-direction keys may be used to generate commands for upward, downward, leftward, and rightward movements. Also, it will be understood by one of ordinary skill in the art that the user input interface 230 may include a 2-direction button or a 2-direction key, instead of the 4-direction buttons or the 4-direction keys.

According to an exemplary embodiment, the 4-direction buttons or the 4-direction keys may be used to move a focus object from one item to another item.

Also, the user input interface 230 may include various input units that may be manipulated by the user, such as a scroll key or a jog wheel.

Also, the user input interface 230 may include a touchpad, which receives the user's touch input such as dragging, tapping, and flipping. Also, the display apparatus 100 may be controlled according to a type of the received user's input (e.g., a direction in which a drag command is input or a time at which a touch command is input).

The sensor unit 240 may include a gyro sensor 241 or an acceleration sensor 243. The gyro sensor 241 may sense information about a movement of the control apparatus 200. For example, the gyro sensor 241 may sense information about an operation of the control apparatus 200 along x, y, and z-axes. The acceleration sensor 243 may sense information about a speed at which the control apparatus 200 is moved. The sensor unit 240 may further include a distance measurement sensor, and thus may sense a distance between the sensor unit 240 and the display apparatus 100.

The control apparatus 200 according to an exemplary embodiment may be a pointing device including both the multi-direction keys, e.g., 4-direction keys, and the touchpad. That is, when the control apparatus 200 is a pointing device, a function of the display apparatus 100 may be controlled according to an inclination direction or an angle using the gyro sensor 241 of the control apparatus 200.

According to an exemplary embodiment, a selection signal of the direction key may be used to move the focus object from one item to another item.

According to an exemplary embodiment, a contact signal of the touchpad may be used to control a movement of a cursor provided on the display 115.

According to an exemplary embodiment, a button pressure signal of the touchpad that is provided via a button may be used to select items displayed on the display 115.

The output unit 250 may output an image or a voice signal in response to a manipulation of the user input interface 230 or a signal received from the display apparatus 100. The user may determine whether the user input interface 230 is manipulated or the display apparatus 100 is controlled through the output unit 250.

For example, the output unit 250 may include a light-emitting diode (LED) module 251 that is turned on, a vibration module 253 that generates vibration, a sound output module 255 that outputs a sound, or a display module 257 that outputs an image when the user input interface 230 is manipulated or a signal is transmitted/received to/from the display apparatus 100 through the wireless communicator 220.

The power supply 260 supplies power to the control apparatus 200. When the control apparatus 200 is not moved for a predetermined period of time, the power supply 260 may cut off power supply to reduce power consumption. When a predetermined key provided on the control apparatus 200 is manipulated, the power supply 260 may resume the power supply.

The storage 270 may store various programs and application data for controlling or operating the control apparatus 200.

The controller 280 controls general operations for controlling the control apparatus 200. The controller 280 may transmit a signal corresponding to a movement of the control apparatus 200 that is sensed by the sensor unit 240 or a signal corresponding to a manipulation of a predetermined key of the user input interface 230, to the display apparatus 100 through the wireless communicator 220.

The display apparatus 100 may include a coordinate value calculator that may calculate a coordinate value of a cursor corresponding to an operation of the control apparatus 200. The coordinate value calculator may correct hand-shake or an error from a signal corresponding to the operation of the control apparatus 200 that is detected and may calculate a coordinate value (x, y) of the cursor to be displayed on the display 115. Also, a transmission signal of the control apparatus 200 that is detected through the detector 130 is transmitted to the controller 180 of the display apparatus 100. The controller 180 may distinguish information about the operation of the control apparatus 200 and a key manipulation from the signal transmitted from the control apparatus 200 and may control the display apparatus 100 according to the information.

Alternatively, the control apparatus 200 may calculate a coordinate value of the cursor corresponding to the operation of the control apparatus 200 and may transmit the coordinate value to the display apparatus 100. In this case, the display apparatus 100 may transmit to the controller 182 information about the coordinate value of the cursor that is received without correcting hand-shake or an error.

According to an exemplary embodiment, the user may control a position of the cursor to be displayed on the screen of the display 115 using the direction key, the touchpad, and a pointing function of the control apparatus 200.

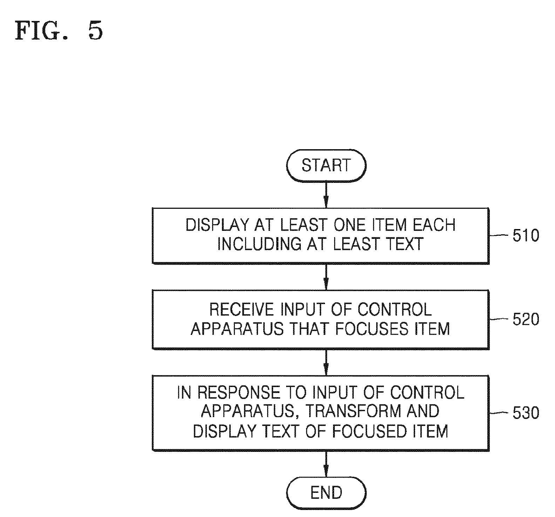

FIG. 5 is a flowchart illustrating a display method according to an exemplary embodiment.

In operation 510, the display apparatus 100 displays at least one item which includes text.

The display apparatus 100 may provide a plurality of items as shown in, for example, FIGS. 6A through 6C. However, it will be understood by one of ordinary skill in the art that FIGS. 6A through 6C are exemplary and the number of items and an arrangement of the items on a screen may be different in an exemplary embodiment.

Referring to FIG. 6A, a plurality of items representing video clips are displayed on a screen 600 of the display 115 according to an exemplary embodiment. The items displayed on the screen 600 may have the same size, and each item 610 may include a text area 611 and an image area 612. Sizes of the text areas 611 and the image areas 612 of the items 610 may be the same. Text that describes content represented by the item 610 may be displayed in the text area 611 and a thumbnail image that visually represents the item 610 may be displayed in the image area 612.

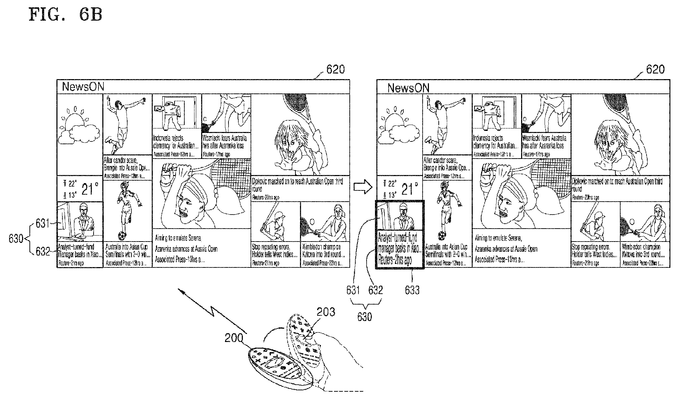

Referring to FIG. 6B, a plurality of items about news are displayed on a screen 620 of the display 115. The items displayed on the screen 620 may have different sizes, and each item may include an image area 631 and a text area 632. Sizes of the text areas 632 and the image areas 631 included in the items may be different from one another., Text that describes content represented by each item 630 may be displayed in the text area 632 and a thumbnail image that visually represents the item 630 may be displayed in the image area 631.

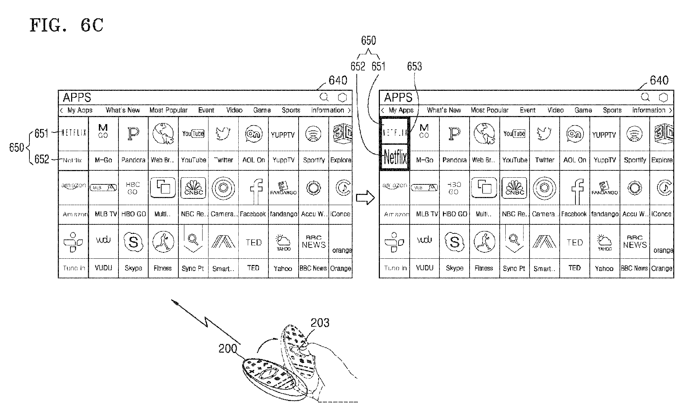

Referring to FIG. 6C, according to an exemplary embodiment, a plurality of items about applications are displayed on a screen 640 of the display 115. The items displayed on the screen 640 may have the same size, and each item 650 may include a text area 652 and an image area 651. Sizes of the text areas 652 and the image areas 651 of the items 650 may be the same and text that describes a name of each application may be displayed in the text area 652 and a thumbnail image that visually represents the application may be displayed in the image area 651.

Referring back to FIG. 5, in operation 520, the display apparatus 100 receives an input of the control apparatus 200 that focuses an item displayed on the display 115.

An input of the control apparatus 200 may be generated by pointing at a specific item using a pointing device or moving the focus object from an item to another item using 4-direction keys. It will be understood by one of ordinary skill in the art that the input of the control apparatus may also be received via other interfaces such as a touchpad, motion recognition, voice recognition, etc.

An input of the control apparatus 200 for controlling an item will now be explained in more detail. The display apparatus 100 may display the cursor 20 on the display 115 in response to an input of the control apparatus 200. As the user moves the control apparatus 200, e.g., a pointing device, the cursor 20 displayed on the screen of the display 115 moves correspondingly to a position at which the control apparatus 200 is pointing.

For example, when the display apparatus 100 receives a signal indicating that the user's finger touches the touchpad provided on a central portion of the control apparatus 200, the display apparatus 100 may initiate a pointing mode and display the cursor 20 on the display 115. When the user moves the control apparatus 200 while the user's finger is touching the touchpad, a motion sensor (e.g., an acceleration sensor and/or a gyro sensor) provided in the control apparatus 200 may detect the movement of the control apparatus 200 and output a motion sensor value corresponding to the detected movement, and the controller 280 of the control apparatus 200 may control the wireless communicator 220 to transmit the output motion sensor value to the display apparatus 100. The display apparatus 100 may determine a position of the cursor 20 based on the motion sensor value received from the control apparatus 200 and may display the position of the cursor 20 on the display 115. The position of the cursor 20 may be determined by the control apparatus 200.

Also, for example, a touch pad may be used to move the focus object from one item to another. Further, when the touchpad of the control apparatus 200 is physically pressed in a similar manner of pressing a general button, a switch provided under the touchpad may operate to execute a specific item. For example, a multimedia content may be reproduced if the item represents the multimedia content, an image or text may be displayed if the item represents the image or the text, and an application may be executed if the item represents the application.

According to an exemplary embodiment, the display apparatus 100 may control items displayed on the display 115 based on an input of the direction key of the control apparatus 200.

According to an exemplary embodiment, when the direction key input 203 is detected while the display apparatus is not in a directional input mode, the display apparatus 100 may initiate the directional input mode in which a user may move the focus object using a direction key mounted on the control apparatus 200. A focus object may be displayed on a specific item by applying a focus visual effect to the item according to a preset algorithm to indicate that the specific item is focused. For example, when an input of the direction key provided on the control apparatus 200 is received for the first time, the display apparatus 100 may apply a focus object to a first item among the items displayed on the display 115. According to an exemplary embodiment, a focus object may be implemented by surrounding an edge of a focused item with a thick line or making a color or a transparency of a focused item different from those of other items.

When an input 203 of the direction key provided on the control apparatus 200 is detected while a specific item is focused, the display apparatus 100 may move the focus object from the specific item to an adjacent item corresponding to the input of the direction key and display the focused item.

For example, while the item 2 is focused on the display 115 of FIG. 1A, when an input of the down direction key is received from the control apparatus 200, the display apparatus 100 may move the focus object 10 from the item 2 to the item 7.

For another example, when an input 203 of the right direction key is received from the control apparatus 200 while the item 5 is focused, the display apparatus 100 may move the focus object 10 from the item 5 to the item 7.

Referring back to FIG. 5, in operation 530, the display apparatus 100 may transform and display text of the focused item in response to an input of the control apparatus 200.

For example, in response to the user's input 203 on the control apparatus 200, which focuses the item 610 that is a first item displayed on the screen 600 of FIG. 6A, the display apparatus 100 may increase a size of text included in the text area 611 by increasing a size of the text area 611 of the focused item 610, without changing a size of the image area 612. As a result, a part of the image area 612 may be covered by the text area 611. In this case, since a size of the focused item 610 is not changed, other items on the screen 600 may be viewed and recognized without obstruction. Also, a focus object, i.e., a focus visual effect, may be applied to the item 610 in order to indicate that the item 610 is focused. Referring to FIG. 6A, the focus object 613 indicates that the item 610 is focused.

For another example, in response to the user's input 203 that focuses the item 630, which is a first item in a lower line of items displayed on the screen 620 of FIG. 6B, the display apparatus 100 may increase a size of the text area 632 of the focused item 630 as shown in the right figure of FIG. 6B to increase a size of text included in the text area 632. Referring to FIG. 6B, the focus object 633 indicates that the item 630 is focused, by displaying a bold line along the edge of the focused item 630

For another example, in response to the user's input 203 that focuses the item 650, which is a first item displayed on the screen 640 of FIG. 6C, the display apparatus 100 may increase a size of the text area 652 of the focused item 650 as shown in the right figure of FIG. 6C to increase a size of text included in the text area 652. Referring to FIG. 6C, the focus object 633 indicates that the item 650 is focused, by displaying a bold line along the edge of the focused item 650.

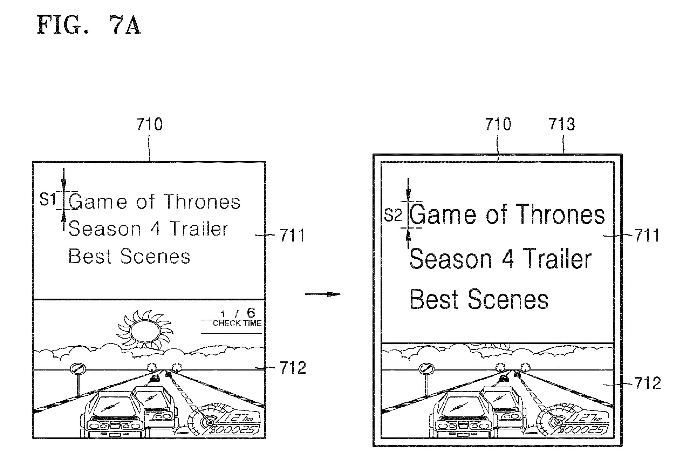

FIGS. 7A through 7I illustrate various methods of transforming text included in a focused item, according to an exemplary embodiment.

Referring to FIG. 7A, an item 710 includes a text area 711 and an image area 712. The text area 711 includes text saying <Game of Thrones Season 4 Trailer Best Scenes> that describes the item 710, and the image area 712 includes a thumbnail image that visually represents the content corresponding to the item 710.

When the item 710 is focused, the text area 711 and the text saying <Game of Thrones Season 4 Trailer Best Scenes> included in the text area 711 may be enlarged. Due to the enlargement of the text area 711, a part of the image area 712 may be covered by the enlarged text area 711, so a part of the thumbnail image need not be displayed. Referring to FIG. 7A, s2, which refers to a size of the text after the item 710 is focused, is greater than s1 which refers to a size of the text before the item 710 is focused.

A size to which text is enlarged may be different in exemplary embodiments. For example text may be enlarged such that users with low vision can recognize the text.

A focus object 713 may be applied to the item 710 in order to indicate that the item 710 is focused. For example, the focus object 713 may draw a line around the focused item 710, as shown in the right figure of FIG. 7A.

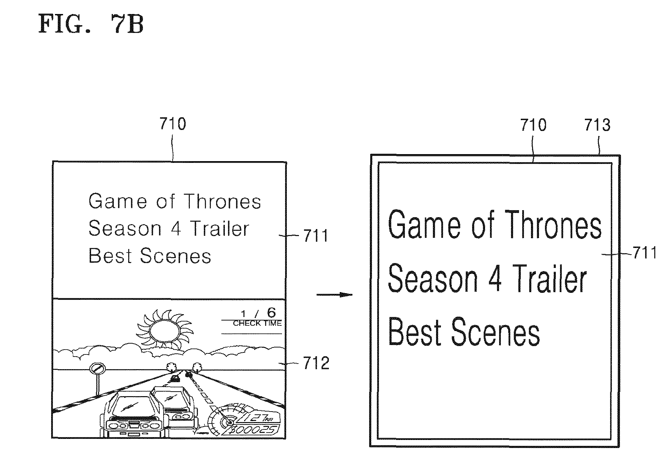

Referring to FIG. 7B, the item 710 includes the text area 711 and the image area 712. The text area 711 includes the text saying <Game of Thrones Season 4 Trailer Best Scenes> that describes the item 710, and the image area 712 includes a thumbnail image that visually represents content about the item 710.

When the item 710 is focused, i.e., when the focus object 713 is displayed on the item 710, the text area 711 and the text saying <Game of Thrones Season 4 Trailer Best Scenes> included in the text area 711 may be enlarged. Due to the enlargement of the text area 711, the whole image area 712 is covered and thus the thumbnail image is not displayed any more.

According to an exemplary embodiment, since it is more important for users with low vision to recognize the text than the image, even though the thumbnail image of the image area 712 is covered, a size of the text may be increased by maximizing a size of the text area 711 while maintaining a size of the item 710.

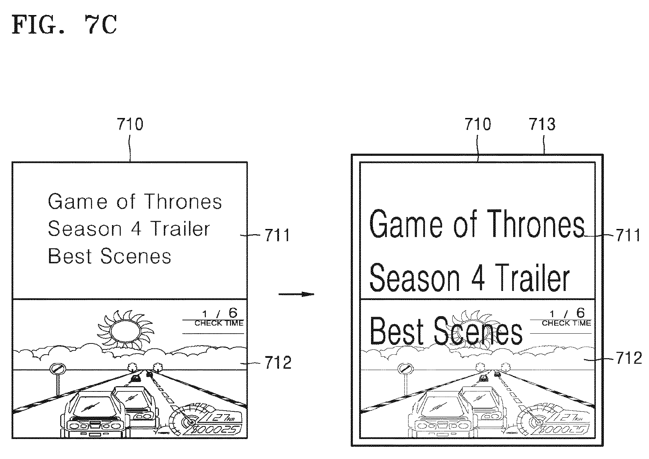

Referring to FIG. 7C, when the item 710 is focused, i.e., when the focus object 713 is displayed on the item 710, the layout of the text area 711 and the image area 712 may be maintained and only the text saying <Game of Thrones Season 4 Trailer Best Scenes> included in the text area 711 may be enlarged. Due to the enlargement of the text area 711, a part of the text may be overlaid on the image area 712.

As a part of the text is overlaid on the image area 712, in order to increase the readability of the text, a thickness of the text may be increased, a color of the text may be changed, and/or a font of the text may be changed.

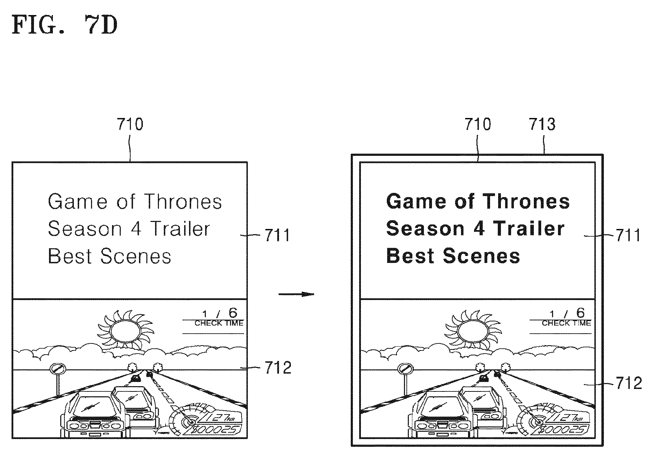

Referring to FIG. 7D, when the item 710 is focused, i.e., when the focus object 713 is displayed on the item 710, the layout of the text area 711 and the image area 712 may be maintained and a color and/or a transparency of the text saying <Game of Thrones Season 4 Trailer Best Scenes> included in the text area 711 may be changed. The readability of the text may be increased by changing the color or the transparency of the text, even without increasing a size of the text.

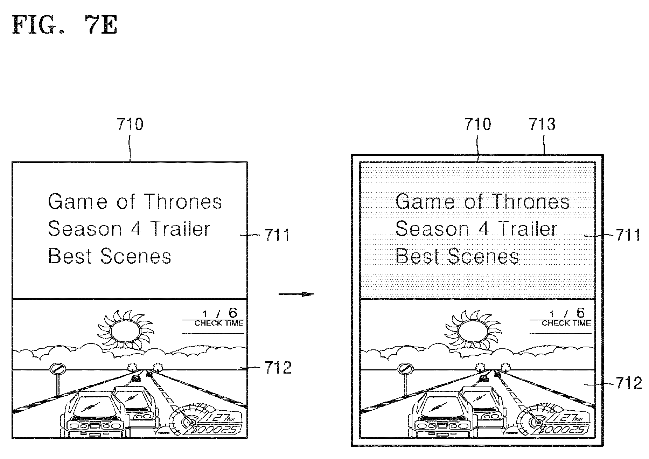

Referring to FIG. 7E, when the item 710 is focused, i.e., when the focus object 713 is displayed on the item 710, the layout of the text area 711 and the image area 712 may be maintained and only a background color of the text saying <Game of Thrones Season 4 Trailer Best Scenes> included in the text area 711 may be changed. For example, the readability of the text may be increased by using complementary colors for the text and the background, even without increasing a size of the text.

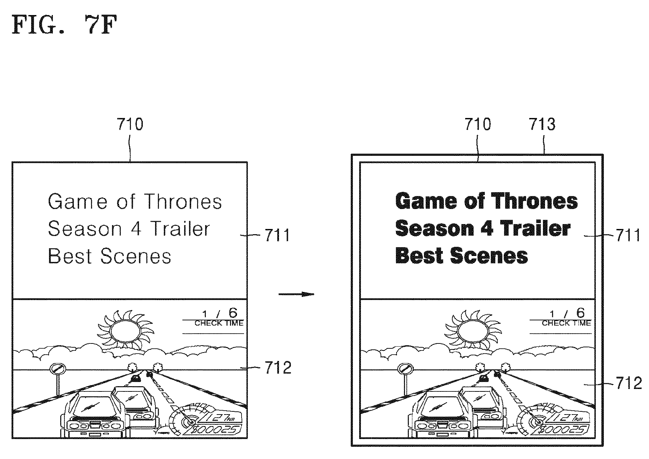

Referring to FIG. 7F, when the item 710 is focused, i.e., when the focus object 713 is displayed on the item 710, the layout of the text area 711 and the image area 712 may be maintained and only a font of the text saying <Game of Thrones Season 4 Trailer Best Scenes> included in the text area 711 may be changed. For example, the readability of the text may be increased by changing the font of the text, even without increasing a size of the text.

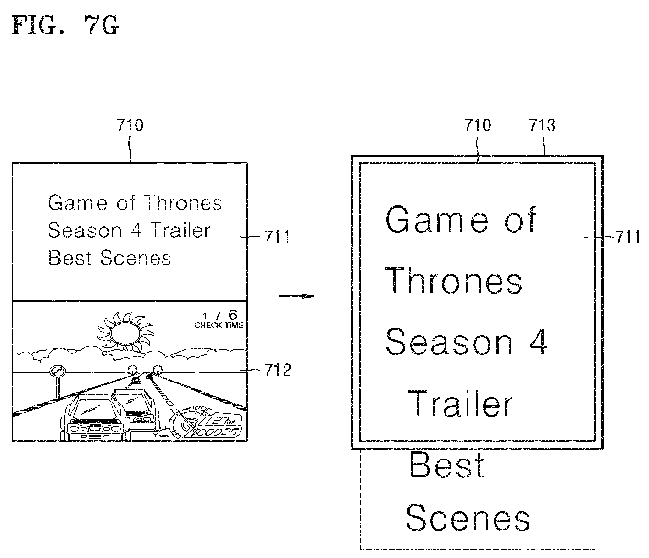

Referring to FIG. 7G, when the item 710 is focused as shown in FIG. 7B, due to enlargement of the text area 711, the entire image area 712 may be covered by the text area 711 and thus the thumbnail image is not be displayed. If the text is enlarged such that a size of the item 710 is not enough to display the enlarged text, and a part of the text is not be displayed on the item 710. In this case, the part of the text that is not displayed on the item 710 may be displayed through scrolling or the like of the control apparatus 200 on the item 710. As such, since the size of the text area 711 may be greater than the size of the item 710, a size of the text displayed on the focused item 710 may be increased without restriction.

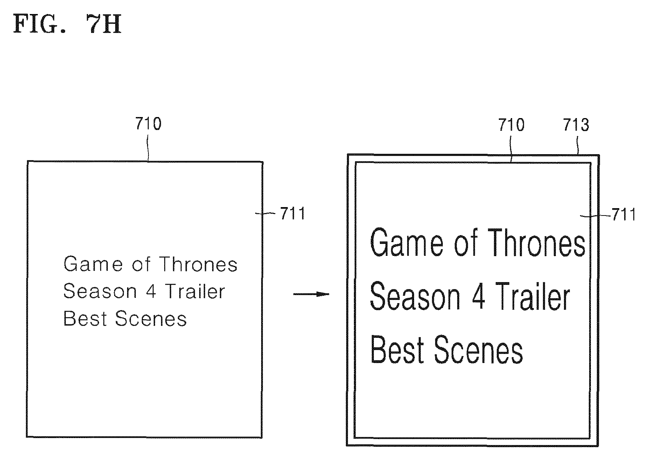

Referring to FIG. 7H, the item 710 may include only the text area 711 without an image area. When the item 710 is focused, the text included in the item 710 may be enlarged.

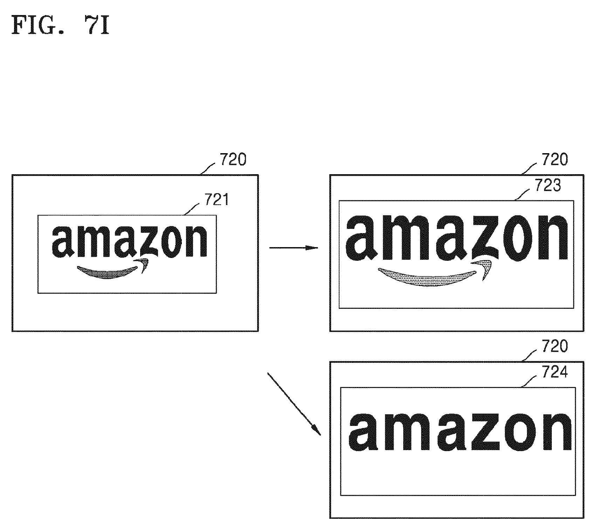

Referring to FIG. 7I, an item 720 may include only an image 721 without text. The image 721 may be a thumbnail image including text. When the item 720 is focused, the display apparatus 100 may display the text included in the image 721. For example, the display apparatus 100 may recognize and extract the text included in the image 721, increase a size of the extracted text, and display the enlarged text. Alternatively, when the item 720 is focused, the display apparatus 100 may enlarge only a part of the image 721 corresponding to the extracted text and may display the part 723 instead of the entire image 721.

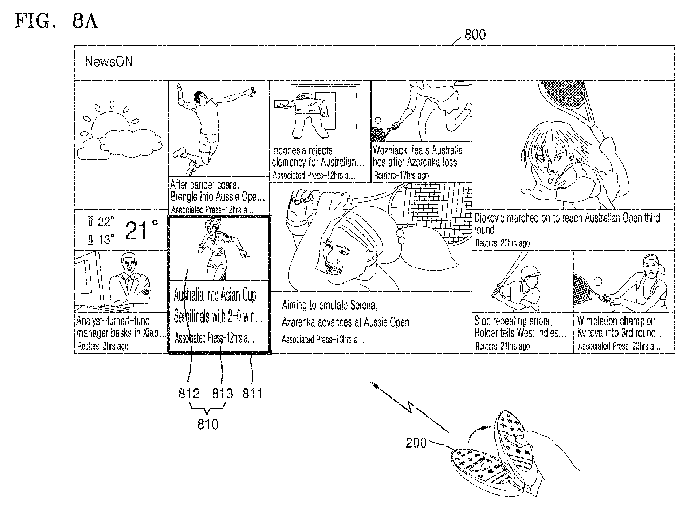

FIGS. 8A through 8C illustrate a method of navigating and executing items, according to an exemplary embodiment.

Referring to FIG. 8A, a plurality of news items are displayed on a screen 800. The news items have different sizes and an item 810 is currently focused. In order to indicate that the item 810 is focused, a focus object 811 is displayed on an edge of the item 810. The focused item 810 includes an image area 812 and a text area 813. As the item 810 is focused, the display apparatus 100 enlarges text of the text area 813 and displays the enlarged text in order to increase the readability of the text of the focused item 810.

In this state, the user may move the focus object using the control apparatus 200. For example, the user may move the focus object from the item 810 to another item by pressing one of multi-direction keys, e.g., 4-direction keys, provided on the control apparatus 200. Alternatively, the user may move the focus object by moving the control apparatus 200, which is a pointing device, to point at another item to focus.

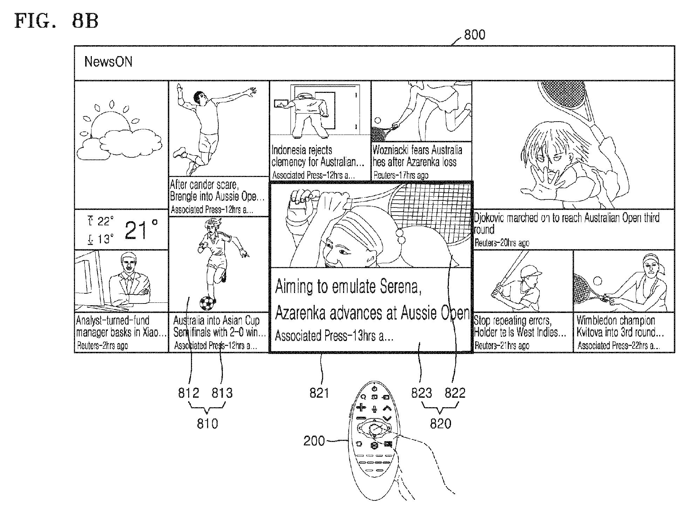

Referring to FIG. 8B, in response to an input of the control apparatus 200 that moves the focus from the item 810 to the item 820, the display apparatus 100 transforms and displays text of the item 820 that is newly focused. In FIG. 8B, the display apparatus 100 may display the focus object 821 on the item 820 in order to indicate that the item 820 is focused. As the item 820 is focused, a text area 823 of the focused item 820 and the text in the text area 823 may be enlarged.

As the focus object is moved from the item 810 to the item 820, the display apparatus 100 may remove the focus visual effect 811 indicating that the item 810 is focused and return the text of the item 810 to its original size.

While the item 820 is focused, the item 820 may be executed when the user presses a predetermined button provided on the control apparatus 200.

In response to an input of the control apparatus 200 that executes the focused item 820, the display apparatus 100 may display content corresponding to the item 820 on the screen 800.

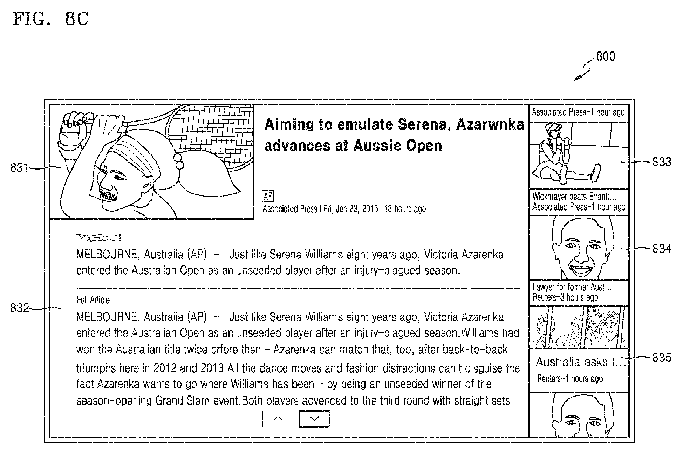

FIG. 8C illustrates the screen 800 when the content corresponding to the item 820 is executed. The display apparatus 100 may display a representative image 831 of the content corresponding to the item 820 on the screen 800 along with specific text 832 corresponding to the content. Also, the display apparatus 100 may further display other items 833, 834, and 835 on the screen 800.

As discussed, embodiments of the invention can provide a display apparatus comprising: a display configured to display one or more items, each of the one or more items comprising text; and a controller configured to transform text of an item among the one or more items and display the transformed text in the item on the display, in response to receiving an input selecting the item displayed on the display.

In some embodiments, the display is configured to display a plurality of items, and the controller is configured to transform the text of the selected item without changing the size of the selected item.

In some embodiments, the display is configured to display the plurality of items in a preset layout (e.g. an array or grid), and the controller is configured to transform the text of the selected item without changing the preset layout.

Embodiments of the invention can also provide a display method comprising: displaying one or more items, each of the one or more items comprising at least one of text and an image; and transforming at least one of the text and the image of an item among the one or more items and displaying the transformed item, in response to receiving an input selecting the item.

According to the one or more exemplary embodiments, since only an information area, e.g., a text area, of an item, which is crucial for a user to recognize, is transformed and provided, information about contents may be effectively provided to the user.

A display method according to the one or more exemplary embodiments may be implemented as computer instructions which may be executed by various computer means and recorded on a computer-readable recording medium. The computer-readable recording medium may include program commands, data files, data structures, or a combination thereof. The program commands recorded on the computer-readable recording medium may be specially designed and constructed for the inventive concept or may be known to and usable by one of ordinary skill in a field of computer software. Examples of the computer-readable recording medium include storage media such as magnetic media (e.g., hard discs, floppy discs, or magnetic tapes), optical media (e.g., compact disc-read only memories (CD-ROMs) or digital versatile discs (DVDs)), magnetooptical media (e.g., floptical discs), and hardware devices that are specially configured to store and carry out program commands (e.g., ROMs, RAMs, or flash memories). Examples of the program commands include a high-level language code that may be executed by a computer using an interpreter as well as a machine language code made by a compiler.

While the inventive concept has been particularly shown and described with reference to exemplary embodiments thereof, the embodiments have merely been used to explain the inventive concept and should not be construed as limiting the scope of the inventive concept as defined by the claims. The exemplary embodiments should be considered in a descriptive sense only and not for purposes of limitation. Therefore, the scope of the inventive concept is defined not by the detailed description of the inventive concept but by the appended claims, and all differences within the scope will be construed as being included in the inventive concept.

## Claims

1. A display apparatus comprising:
a display configured to display one or more items, each of the one or more items comprising text; and
a controller configured to transform text of an item among the one or more items and display the transformed text in the item on the display, in response to receiving an input selecting the item displayed on the display.

2. The display apparatus of claim 1, wherein the display is configured to display a plurality of items, and the controller is configured to transform the text of the selected item without changing the size of the selected item.

3. The display apparatus of claim 1 or 2, wherein the display is configured to display the plurality of items in a preset layout, and the controller is configured to transform the text of the selected item without changing the preset layout.

4. The display apparatus of any one of claims 1 to 3, wherein the controller is further configured to transform the text by performing at least one of enlarging the text, changing a color of the text, changing a transparency of the text, changing a background color of the text, changing a font of the text, and changing an outline of the text.

5. The display apparatus of any one of claims 1 to 4, wherein the controller is further configured to display the transformed text in the selected item without changing a layout of the selected item.

6. The display apparatus of any one of claims 1 to 5, wherein the selected item further comprises an image.

7. The display apparatus of claim 6, wherein the controller is further configured to transform the text by enlarging the text of the selected item and reducing a size of the image.

8. The display apparatus of claim 6, wherein the controller is further configured to display the transformed text of the selected item without the image.

9. The display apparatus of claim 6 or 7, wherein the controller is further configured to overlay a part or all of the transformed text of the selected item on the image.

10. The display apparatus of any one of claims 1 to 9, wherein the controller is further configured to display only a part of the transformed text in the selected item when a size of the selected item is smaller than a size required to display the entire transformed text, and scroll the transformed text to display a remaining part of the transformed text in the selected item in response to a scrolling input on the selected item.

11. A display method comprising:
displaying one or more items, each of the one or more items comprising text; and
transforming text of an item among the one or more items and displaying the transformed text in the item, in response to receiving an input selecting the item.

12. The display method of claim 11,
wherein the item comprises an image, and
wherein the transforming comprises transforming the image by:
extracting text from the image of the item; and
transforming the item to display the extracted text.

13. The display method of claim 11,
wherein the item comprises an image, and
wherein the transforming comprises transforming the image by:
extracting a region of the image comprising text;
enlarging the region; and
transforming the item to display the enlarged region.

14. The display method of claim 11,
wherein the transforming comprises transforming the text by at least one of enlarging the text, changing a color of the text, changing a transparency of the text, changing a background color of the text, changing a font of the text, and changing an outline of the text.

15. The display method of any one of claims 11 to 13, further comprising displaying a plurality of items, and transforming the text of the selected item without changing the size of the selected item.
